# FASCICULE DE BREVET EUROPEEN

(11) **EP 2 063 071 B1**
(45) Date de publication et mention de la délivrance du brevet: **31.10.2012**
(21) Numéro de dépôt: 08169827.6
(22) Date de dépôt: 25.11.2008
(51) Int. Cl.: F01D 5/14, F01D 5/18

(54) **Aube de turbomachine**
Laufradschaufel eines Turbotriebwerks
Turbomachine vane

(30) Priorité: 26.11.2007 FR 0759295
(43) Date de publication de la demande: 27.05.2009
(73) Titulaire: Snecma, 75015 Paris (FR)
(72) Inventeur: Digard Brou de Cuisssart, Sébastien, 75020, Paris (FR); Le Ray, Matthieu, 94170, Le Perreux sur Marne (FR)
(74) Mandataire: Barbin le Bourhis, Joël

(56) Documents cités:
- EP-A- 0 034 961
- EP-A- 1 013 882
- EP-A- 1 826 361
- GB-A- 679 931
- US-A- 3 017 159
- US-A- 3 420 502
- US-A- 3 885 609
- US-A- 5 368 441
- US-A1- 2005 276 697
- US-A1- 2006 222 493

## Description

L'invention concerne une aube dans une turbomachine, et principalement, une aube plongée dans des gaz de flux chaud, nécessitant la mise en oeuvre de moyens spécifiques pour lui permettre de fonctionner malgré des conditions de température et souvent de pression difficiles. La turbomachine peut être terrestre, ou encore aéronautique, par exemple un turboréacteur ou un turbopropulseur.

Dans une telle turbomachine, les aubes sont plongées dans un flux de gaz qui circule à des vitesses parfois élevées par exemple des vitesses supersoniques. Les températures auxquelles sont soumises les aubes varient fortement, typiquement pour des turbomachines dans le domaine aéronautique entre - 50°C et plus de 1000°C. Les aubes sont donc soumises à des forces de pression et à des gradients de température considérables.

Du fait des hautes températures et des gradients de température associés, des contraintes considérables apparaissent à l'intérieur des aubes. Ces contraintes peuvent entrainer l'apparition de fissures, localisées notamment dans le bord de fuite des aubes. De telles fissures nécessitent naturellement le remplacement de celles-ci.

Pour permettre aux aubes de résister mécaniquement à ces contraintes, de manière connue, des nervures sont prévues au voisinage de leur bord de fuite. Ces nervures permettent la rigidification mécanique du bord de fuite, sans cependant engendrer une surépaisseur trop grande qui réduirait les performances aérodynamiques de l'aube. En général, ces nervures se terminent toutes sensiblement à la même distance du bord de fuite. Voir par exemple le document EP 1 826 361 A2.

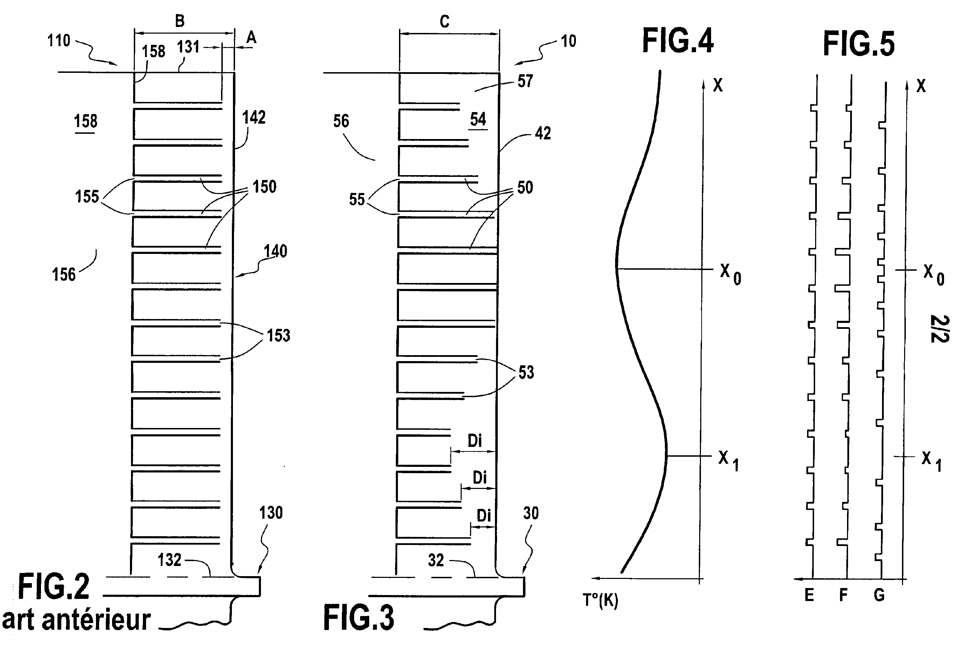

En faisant référence à la figure 2, un exemple d'aube comportant des nervures au voisinage de son bord de fuite disposées suivant un mode de réalisation connu, va maintenant être détaillé. La figure 2 présente de manière schématique la pale 140 d'une aube 110. Cette pale comporte des nervures 150 disposées le long de son bord de fuite 142. Ces nervures 150 s'étendent depuis la plate-forme 130 jusqu'à l'extrémité opposée 131 de la pale 140. Elles sont sensiblement parallèles à la face supérieure 132 de la plate-forme, c'est-à-dire la face dirigée du côté de la pale. Les extrémités 153 des nervures 150 situées du côté du bord de fuite sont toutes situées à la même distance A de celui-ci. Par ailleurs, les extrémités 155 des nervures situées à l'opposé du bord de fuite, ainsi que la marche 158 formée entre la surface principale 156 de l'intrados et la surface 154 de bord de fuite sont situées à une distance B constante ou sensiblement constante du bord de fuite 142.

Cependant, il s'est avéré que de telles nervures ne permettent pas de stabiliser efficacement la position des bords de fuite de l'aube ; et l'on observe en fonctionnement des déformations nuisibles de la pale, notamment au voisinage du bord de fuite et dans le rayon de raccordement entre la pale et la plate-forme. En effet, les gradients thermiques qui existent entre les parois intrados et extrados de l'aube génèrent des déplacements non linéaires dans une direction sensiblement perpendiculaire au bord de fuite.

En outre, malgré ces nervures, le bord de fuite de l'aube reste une zone de faiblesse de l'aube, au niveau de laquelle peuvent apparaître des fissures à cause des niveaux de contraintes thermomécaniques très élevés qui y règnent en fonctionnement. De telles fissures conduisent naturellement à un périssement plus ou moins rapide de l'aube. Le bord de fuite, à cause de cette possibilité d'apparition de défauts, apparaît ainsi comme un facteur limitant pour la durée de vie moyenne d'une aube. Un premier objet de l'invention est de définir une aube de turbomachine comportant des nervures formées au voisinage du bord de fuite, qui soit facile à fabriquer de manière industrielle, et qui ne présente pas les inconvénients précités.

Cet objectif est atteint grâce au fait que, sur la plus grande partie du bord de fuite, les extrémités aval des nervures sont plus près du bord de fuite et/ou la section des nervures est plus grande, dans les zones dans lesquelles la température en fonctionnement est particulièrement élevée.

Par ce moyen, sur la plus grande partie du bord de fuite, l'importance des nervures est corrélée avec la température locale en fonctionnement de l'aube, ou en d'autres termes, les nervures sont plus ou moins importantes en fonction de la température locale en fonctionnement de l'aube. Cela conduit au fait que le long du bord de fuite, les nervures sont plus ou moins allongées en direction du bord de fuite, ou sont de sections plus ou moins grandes.

Il a été constaté en effet que la température est le paramètre principal régissant les déformations du bord de fuite, du fait des dilatations thermiques et ainsi des contraintes qu'elle génère au sein du matériau. La fonction première des nervures est donc la rigidification du bord de fuite, de manière à stabiliser celui-ci en position. Les nervures contribuent aussi à réduire le niveau des contraintes dans le matériau. En faisant varier l'importance des nervures en fonction de ce paramètre de température, il est possible d'optimiser la conception des aubes, de manière à permettre la stabilisation de celles-ci sans dégradation excessive des propriétés aérodynamiques.

La température locale en fonctionnement de l'aube est le premier paramètre à prendre en compte pour dimensionner les nervures au voisinage du bord de fuite. On notera toutefois que d'autres paramètres peuvent être pris en compte, ce qui conduit parfois pour une petite partie des nervures à adopter d'autres règles de dimensionnement que celle précédemment énoncée.

Selon un mode de réalisation, sur la plus grande partie du bord de fuite, l'importance des nervures est augmentée au voisinage du bord de fuite dans les zones dans lesquelles la température en fonctionnement de l'aube est particulièrement élevée. Ainsi, le bord de fuite est rigidifié dans les zones chaudes alors que dans les zones plus froides il ne l'est pas, ce qui permet de maintenir le nombre et l'importance des nervures à un niveau minimum mais suffisant pour rigidifier le bord de fuite et empêcher les déformations de celui-ci.

Selon un mode de réalisation, sur la plus grande partie du bord de fuite, les extrémités aval des nervures sont plus près du bord de fuite dans les zones dans lesquelles la température en fonctionnement est particulièrement élevée.

Le bord de fuite proprement dit est en effet la zone la plus critique : C'est là que la paroi de la pale est la plus mince et que le risque de déformation est le plus grand. En prolongeant les nervures jusqu'au voisinage du bord de fuite préférentiellement dans les zones chaudes, on obtient ainsi une rigidification du bord de fuite sans porter inutilement préjudice aux qualités aérodynamiques de l'aube.

Selon un mode de réalisation, sur la plus grande partie du bord de fuite, la section des nervures est plus grande dans les zones dans lesquelles la température en fonctionnement est particulièrement élevée. Des nervures de section importante apportent en effet une résistance en flexion au bord de fuite considérablement plus grande que des nervures de faible section.

On notera par ailleurs que, dans les modes de réalisation présentés précédemment, il a été indiqué comment renforcer la rigidité d'une zone chaude du bord de fuite de l'aube. Naturellement, des dispositions inverses sont à prendre pour éviter de rigidifier inutilement des zones froides du bord de fuite de l'aube.

Selon un mode de réalisation, l'aube comporte une plate-forme, et un ensemble de nervures courtes au voisinage de celle-ci. En effet, il a été constaté qu'il existe souvent une concentration de contraintes dans le bord de fuite des aubes au voisinage de leurs plates-formes. Pour limiter ces contraintes, avantageusement, des nervures courtes peuvent être prévues au voisinage de la plate-forme, par exemple une première nervure courte, voire deux ou trois nervures plus courtes que les autres.

Un second objet de l'invention est de remédier aux inconvénients précités en définissant une turbine haute pression de turbomachine, comportant au moins une aube selon l'un des modes de réalisation précédents.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue en perspective d'une aube de turbomachine conforme à l'invention ;
- les figures 2 et 3 sont des vues de face partielles d'une aube de turbomachine, présentant les nervures aménagées sur leur bord de fuite, respectivement selon l'art antérieur et selon l'invention ;
- la figure 4 est une courbe de température le long du bord de fuite d'une aube de turbomachine telle que présenté sur la figure 3 ; et
- la figure 5 présente différentes sections possibles pour des nervures d'aube de turbomachine conforme à l'invention.

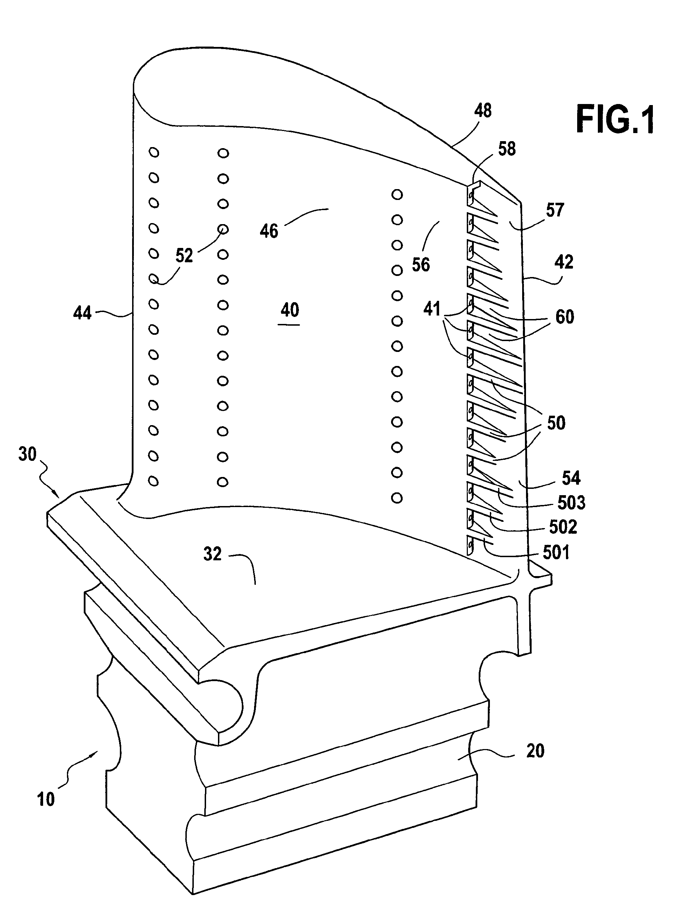

En faisant référence à la figure 1, une aube de turbomachine selon l'invention va maintenant être décrite.

L'aube 10 comporte un pied 20, une plate-forme 30 et une pale 40. La pale 40 s'étend entre un intrados 46 et un extrados 48. Ceux-ci sont reliés au niveau du bord d'attaque 44 et du bord de fuite 42. La pale comporte en outre des conduits intérieurs d'injection d'air qui débouchent au niveau de trous 52. Ces conduits permettent l'apport d'air frais au niveau de l'aube pour éviter sa montée en température, la refroidir et ainsi permettre son utilisation même au sein de flux de gaz de températures extrêmement élevées.

Au niveau du bord de fuite, les surfaces d'intrados et d'extrados se rapprochent pour former une paroi 54 de faible épaisseur. Cette paroi 54 est rigidifiée par des nervures 50. Ces nervures sont formées sur l'intrados 46.

La forme de l'intrados 46 au voisinage de son bord de fuite 42 est la suivante. L'intrados comporte une surface principale 56 de forme générale galbée et régulière. Cette surface principale de l'intrados est interrompue par une marche 58 et est prolongée en aval de cette marche 58 par la surface 57 qui est la surface de la paroi 54 située du côté de l'intrados. Les nervures 50 s'étendent depuis ladite marche 58 jusqu'à la paroi 54. Entre des nervures consécutives sont formées des encoches 60. Avantageusement, des trous 41 d'injection d'air sont formés dans ces encoches 60, permettant le refroidissement du bord de fuite 42.

En faisant référence aux figures 3 et 4, le fonctionnement et la disposition des nervures dans l'aube de turbomachine de la figure 1 vont maintenant être détaillés. La pale 40 d'aube 10 de turbomachine représentée sur la figure 3 fait apparaître un ensemble de nervures 50 sensiblement parallèles à la face supérieure 32 de la plate-forme 30 de l'aube 10. Ces nervures 50 assurent la rigidification de la paroi 54 de bord de fuite de la pale 40. Les nervures 50 s'étendent du côté amont entre la marche 58 qui sépare la surface principale 56 de l'intrados et la surface 57 de bord de fuite de la pale.

Sur la figure 3, cette marche 58 est représentée comme étant à une distance sensiblement constante C du bord de fuite 42. De manière plus générale, cette distance C entre la marche 58 et le bord de fuite 42 pourrait varier, par exemple en fonction de la distance entre la nervure et la surface supérieure 32 de la plate-forme 30.

D'autre part, les extrémités 53 des nervures 50 du côté du bord de fuite sont situées à différentes distances Dᵢ du bord de fuite 42 (par souci de simplicité, toutes les distances Dᵢ ne sont pas représentées). Ces distances Dᵢ peuvent être appréciées en les comparant au profil de température présenté par la figure 4. La figure 4 montre une courbe représentant la variation de la température T° locale sur le bord de fuite de l'aube en fonction de la distance X par rapport à la plate-forme de l'aube. La comparaison des figures 3 et 4 fait apparaître que plus la température T° au voisinage du bord de fuite est élevée, plus les extrémités 53 de nervures sont proches du bord de fuite, de manière à rigidifier celui-ci davantage dans les zones chaudes.

Par exemple, dans la partie de l'aube située à une distance X0 de la plateforme 32, indiquée sur la figure 4, la courbe de température passe par un maximum local. Pour rigidifier le bord de fuite dans cette zone de température élevée, dans cette zone les nervures sont particulièrement longues et s'étendent sensiblement jusqu'au bord de fuite, c'est-à-dire plus exactement que la distance entre l'extrémité des nervures et le bord de fuite est réduite au minimum, comme il apparaît sur la figure 3.

Inversement, dans les zones plus froides, les nervures 50 peuvent avoir une extrémité 53 située à une certaine ou à une plus grande distance du bord de fuite : c'est par exemple ce que l'on observe pour la partie de l'aube 40 située à distance X1 de la plateforme 32. A ce niveau, la courbe de température passe par un minimum ; corrélativement, la distance entre le bord de fuite et l'extrémité des nervures du côté du bord de fuite est augmentée, et passe dans cet exemple par un maximum.

On notera cependant que la corrélation précédemment indiquée entre la distance des extrémités des nervures et le bord de fuite et la température locale du bord de fuite de l'aube n'est pas nécessairement le seul paramètre à prendre en compte pour déterminer la distance qu'il doit y avoir entre l'extrémité des nervures et le bord de fuite.

Par exemple, comme on le voit sur la figure 1, on peut choisir de privilégier localement un autre critère et par exemple, au voisinage de la plate-forme, de réduire localement la longueur des nervures (nervures 501, 502, 503) de manière à ce qu'elles s'arrêtent à une certaine distance du bord de fuite afin de donner à celui-ci de la souplesse au voisinage de la plate forme. Cette souplesse apparaît comme particulièrement utile à ce niveau du bord de fuite, du fait de la forte concentration de contraintes qui y règne.

La figure 5 représente différents profils de nervures utilisables dans une aube selon l'invention. Le repère E correspond à des nervures de même section, et espacées régulièrement. Cela peut correspondre à un mode de réalisation de l'invention, dans lequel on adapte l'importance des nervures simplement en faisant varier la distance entre l'extrémité des nervures et le bord de fuite. On a fait apparaître que chaque nervure, individuellement, peut avoir une section avec des arêtes plus ou moins vives, ou plus ou moins arrondies.

Le repère F correspond à des nervures de section dont les sections varient en fonction du profil de température, les sections étant plus importantes dans les zones de température élevée (par exemple au point X0), et plus faibles dans les zones de faible température (par exemple au point X1).

Le repère G correspond à des nervures dont l'écartement deux à deux varie en fonction du profil de température, les nervures étant plus rapprochées dans les zones de température élevée (par exemple au point X0), et plus écartées les unes des autres dans les zones de faible température (par exemple au point X1).

Les différentes combinaisons indiquées précédemment peuvent naturellement être combinées les unes aux autres.

## Revendications

1. Aube (10) de turbomachine comportant des nervures (50) formées sur l'intrados au voisinage du bord de fuite (42), **caractérisée en ce que**, sur la plus grande partie du bord de fuite, dans les zones dans lesquelles la température en fonctionnement est particulièrement élevée, les extrémités (53), situées du côté du bord de fuite, des nervures, sont plus près du bord de fuite et/ou la section des nervures (F) est plus grande.

2. Aube selon la revendication 1, dans laquelle sur la plus grande partie du bord de fuite, l'importance des nervures (50) est augmentée au voisinage du bord de fuite dans les zones (X0) dans lesquelles la température en fonctionnement de l'aube est particulièrement élevée.

3. Aube selon la revendication 1 ou 2, **caractérisée en ce qu'**elle comporte une plate-forme, et un ensemble de nervures courtes (501,502, 503') au voisinage de celle-ci.

4. Aube selon l'une quelconque des revendications 1 à 3, dans laquelle des encoches (60) sont formées entre des nervures consécutives (50), des trous d'injection d'air (51) étant formés dans ces encoches.

5. Turbine haute pression de turbomachine, comportant au moins une aube (10) selon l'une quelconque des revendications 1 à 4.

6. Turbomachine comportant au moins une aube (10) selon l'une quelconque des revendications 1 à 4.

## Claims

1. A turbomachine blade (10) having ribs (50) formed on the pressure side in the vicinity of the trailing edge (42), the blade being **characterized in that** over the major fraction of the trailing edge (42), the ends (53) of the ribs on the side of the trailing edge are closer to the trailing edge and/or the sections of the ribs (F) are greater in zones where the temperature in operation is particularly high.

2. A blade according to claim 1, wherein over the major fraction of the trailing edge, the strength of the ribs (50) is increased in the vicinity of the trailing edge in zones (X0) where the temperature of the blade in operation is particularly high.

3. A blade according to claim 1 or claim 2, **characterized in that** it includes a platform, and has a set of short ribs (501, 502, 503') in the vicinity thereof.

4. A blade according to any one of claims 1 to 3, in which notches (60) are left between consecutive ribs (50) with air injection holes (41) being formed in said notches.

5. A turbomachine high-pressure turbine including at least one blade (10) according to any one of claims 1 to 4.

6. A turbomachine including at least one blade (10) according to any one of claims 1 to 4.

## Patentansprüche

1. Schaufel (10) einer Turbomaschine, die Rippen (50) umfaßt, welche an der Vorderseite in der Nähe der Austrittskante (42) ausgebildet sind, **dadurch gekennzeichnet, daß** über den größten Teil der Austrittskante, in den Bereichen, in denen die Temperatur im Betrieb besonders hoch ist, die auf der Seite der Austrittskante gelegenen Enden (53) der Rippen näher an der Austrittskante gelegen sind und/oder der Querschnitt der Rippen (F) größer ist.

2. Schaufel nach Anspruch 1, wobei über den größten Teil der Austrittskante die Größe der Rippen (50) in der Nähe der Austrittskante in den Bereichen (XO), in denen die Temperatur im Betrieb der Schaufel besonders hoch ist, erhöht ist.

3. Schaufel nach Anspruch 1 oder 2, **dadurch gekennzeichnet, daß** sie eine Plattform sowie eine Anordnung von kurzen Rippen (501, 502, 503') in deren Nähe umfaßt.

4. Schaufel nach einem der Ansprüche 1 bis 3, wobei Nuten (60) zwischen aufeinanderfolgenden Rippen (50) gebildet sind, wobei Lufteinblaslöcher (41) in diesen Nuten ausgebildet sind.

5. Hochdruckturbine einer Turbomaschine, die wenigstens eine Schaufel (10) nach einem der Ansprüche 1 bis 4 umfaßt.

6. Turbomaschine, die wenigstens eine Schaufel (10) nach einem der Ansprüche 1 bis 4 umfaßt.
